# EUROPÄISCHE PATENTSCHRIFT

(11) **EP 1 737 718 B1**
(45) Veröffentlichungstag und Bekanntmachung des Hinweises auf die Patenterteilung: **12.03.2008**
(21) Anmeldenummer: 05739619.4
(22) Anmeldetag: 13.04.2005
(51) Int. Cl.: B61H 7/08

(54) **MAGNETSCHIENENBREMSVORRICHTUNG**
MAGNETIC RAIL BRAKE DEVICE
DISPOSITIF DE FREIN ELECTROMAGNETIQUE SUR RAILS

(30) Priorität: 14.04.2004 DE 102004018009
(43) Veröffentlichungstag der Anmeldung: 03.01.2007
(73) Patentinhaber: KNORR-BREMSE Systeme für Schienenfahrzeuge GmbH, 80809 München (DE)
(72) Erfinder: LEHMANN, Henry, A-2371 Hinterbrühl (AT); KOIDL, Hermann, A-1140 Wien (AT); SCHMIED, Lothar, A-2340 Mödling (AT); RATHAMMER, Richard, A-2262 Grub (AT); HAAS, Stefan, A-2340 Mödling (AT)
(74) Vertreter: Schönmann, Kurt
(86) Internationale Anmeldenummer: PCT/EP2005/003884
(87) Internationale Veröffentlichungsnummer: WO 2005/100122

(56) Entgegenhaltungen:
- DE-A1- 2 708 399
- DE-C- 457 672
- DE-C- 469 614
- FR-A- 2 390 318

## Beschreibung

### Stand der Technik

Die Erfindung betrifft eine Magnetschienenbremsvorrichtung eines Schienenfahrzeugs mit einem magnetischen Grund- oder Trägerkörper sowie einer Magnetspule, welche mittels einer vom Grund- oder Trägerkörper gehaltenen, wenigstens einen elektrischen Anschluss aufweisenden Anschlusseinrichtung mit einer Spannungsquelle verbindbar ist, wobei die Anschlusseinrichtung stirnseitig, innerhalb einer gedachten einhüllenden Fläche des Grund- oder Trägerkörpers angeordnet ist, gemäß dem Oberbegriff von Patentanspruch 1.

Eine Magnetschienenbremse ist beispielsweise aus der DE 101 11 685 A1 bekannt. Die krafterzeugende Hauptkomponente einer elektrischen Magnetschienenbremse ist der Bremsmagnet. Er ist im Prinzip ein Elektromagnet, bestehend aus einer sich in Schienenrichtung erstreckenden Magnetspule und einem hufeisenähnlichen Magnetkern, welcher den Grund- oder Trägerkörper bildet. Der in der Magnetspule fließende Gleichstrom bewirkt eine magnetische Spannung, die in dem Magnetkern einen magnetischen Fluss erzeugt, der sich über den Schienenkopf kurzschließt, sobald der Bremsmagnet auf der Schiene aufliegt. Dadurch kommt eine magnetische Anziehungskraft zwischen Bremsmagnet und Schiene zustande. Durch die kinetische Energie des bewegten Schienenfahrzeugs wird die Magnetschienenbremse über Mitnehmer entlang der Schiene gezogen. Hierbei entsteht durch die Gleitreibung zwischen Bremsmagnet und Schiene in Verbindung mit der magnetischen Anziehungskraft eine Bremskraft. Die Größe der Bremskraft einer Magnetschienenbremse ist u.a. vom magnetischen Widerstand des Magnetkreises, d.h. der Geometrie und Permeabilität, der magnetischen Durchflutung, dem Reibwert zwischen Bremsmagnet und Schiene sowie dem Schienenzustand abhängig.

Prinzipiell kann man nach dem konstruktiven Aufbau zwei verschiedene Arten von Magneten unterscheiden. In einer ersten Ausführungsform ist der Bremsmagnet ein Starrmagnet, mit dem zwei Verschleißleisten verschraubt werden, die durch eine unmagnetische Leiste in Längsrichtung getrennt sind. Dies dient zur Vermeidung eines magnetischen Kurzschlusses innerhalb des Bremsmagneten. Starrmagneten werden meist im Nahverkehr bei Strassen- und Stadtbahnen eingesetzt.

Weiterhin sind Gliedermagneten bekannt, bei welchen der Spulenkörper keinen durchgehenden starren Stahlkern besitzen, sondern zwischen den Stahlkernen lediglich durch Trennwände abgeteilte offene Kammern aufweist. In die einzelnen Kammern werden Zwischenglieder eingesetzt, die während des Bremsvorgangs beweglich sind. Damit können sie Unebenheiten am Schienenkopf folgen. Endstücke sind starr mit dem Spulenkörper verschraubt. Gliedermagneten werden standartmäßig im Vollbahnbereich eingesetzt. Betreffend die Ausführungsformen von Magnetschienenbremsen wird auf die Veröffentlichung "Grundlagen der Bremstechnik", Seite 92 bis 97 der Knorr-Bremse AG, München, 2003 verwiesen.

Die Magnetspule steht mittels einer vom Grund- oder Trägerkörper gehaltenen, je einen zapfenförmigen Anschluss für den Plus- und den Minuspol aufweisenden Anschlusseinrichtung mit einer Spannungsquelle in Verbindung. Die bekannten Magnetschienenbremsen haben Anschlusseinrichtungen, die einen in einem oberen Bereich des Grund- oder Trägerkörpers parallel zu diesem befestigten länglichen Kabelabzweigflansch aufweisen, von welchem die beiden Anschlüsse gegenläufig wegragen. Andere Bauformen haben nach oben oder zur Seite ragende Anschlüsse, die jedenfalls deutlich über die Umgrenzung des Magneten ragen. Nachteil dieser Anordnungen der Anschlussrichtung ist, dass der Bauraum für am Grund- oder Trägerkörper oberhalb oder seitlich befestigte Halteelemente, beispielsweise Mitnehmer oder Spurhalter beschränkt wird oder das Fahrzeugumgrenzungsprofil verletzt wird. Weiterhin baut eine solche Magnetschienenbremse relativ groß.

Eine gattungsgemäße Magnetschienenbremsvorrichtung ist aus der DE 27 08 399 A1 bekannt. Dort ist die Anschlusseinrichtung am Grund- und Trägerkörper zwar stirnseitig angeordnet, jedoch ist der Bauraum im Bereich der Anschlusseinrichtung beispielsweise für Anbauteile sehr beschränkt.

### Aufgabe der Erfindung

Aufgabe der Erfindung ist es daher, eine Magnetschienenbremse der eingangs erwähnten Art derart weiterzubilden, dass sie kompakter baut.

### Vorteile der Erfindung

Indem vorgesehen ist, dass die Anschlusseinrichtung stirnseitig, innerhalb einer gedachten einhüllenden Fläche des magnetischen Grund- oder Trägerkörpers angeordnet ist, baut die Magnetschienenbremse sehr kompakt, insbesondere hinsichtlich ihrer Breite und Höhe. Wesentlich ist weiterhin, dass die Anschlusseinrichtung unterhalb einer Längsschwerpunktachse der Magnetspule angeordnet ist. Dann ist seitlich und/oder im oberen Bereich des Grund- oder Trägerkörpers genügend Bauraum für Halteelemente oder Anbauteile vorhanden, welche dort angebunden werden müssen.

Durch die in den Unteransprüchen aufgeführten Maßnahmen sind vorteilhafte Weiterbildungen und Verbesserungen der im Anspruch 1 angegebenen Erfindung möglich.

Besonders bevorzugt ist die Anschlussvorrichtung am Grund- oder Trägerkörper stirnseitig angeordnet. Dann können die Befestigungsleisten, mit welchen der Grund- oder Trägerkörper an Anbauteilen befestigt ist, durchgehend, anstatt wie beim Stand der Technik geteilt ausgeführt werden, was eine vorteilhaft höhere Tragfähigkeit und Steifigkeit mit sich bringt.

Bevorzugt ist die Anschlusseinrichtung oberhalb eines sich in Längsrichtung erstreckenden stirnseitigen Endstücks des Grund- oder Trägerkörpers angeordnet, wobei die Anschlusseinrichtung das Endstück aber nicht überragt.

Solche in der UIC 541 beschriebenen, hornförmigen Endstücke sind bezogen auf eine Bodenfläche des Grund- oder Trägerkörpers leicht nach oben abgewinkelt und ermöglichen hierdurch ein gleichmäßiges Übergleiten von Weichen. Der ohnehin oberhalb dieser Endstücke vorhandene, bisher ungenutzte Bauraum wird daher vorteilhaft für die Unterbringung der Anschlusseinrichtung genutzt, ohne die Baulänge der Magnetschienenbremse zu erhöhen.

Nachfolgend soll die Erfindung anhand der Zeichnungen beispielhaft dargestellt werden. In den Zeichnungen zeigt
- Fig.1: eine Stirnansicht einer Magnetschienenbremse gemäß einer bevorzugten Ausführungsform;
- Fig.2: eine Stirnansicht einer Magnetschienenbremse gemäß einer weiteren Ausführungsform;
- Fig.3: eine Seitenansicht der Magnetschienenbremse von Fig.1.

### Beschreibung der Ausführungsbeispiele

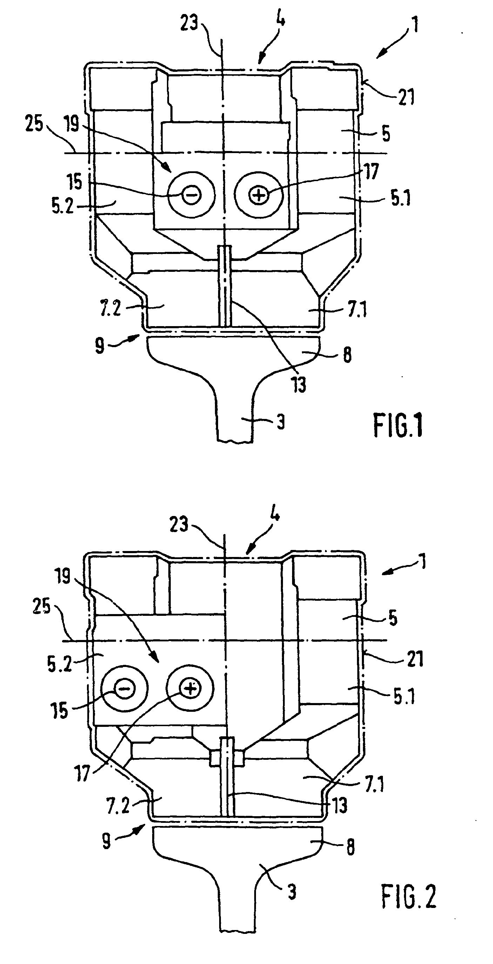

Die in Fig. 1 gezeigte bevorzugte Ausführungsform einer Magnetschienenbremse 1 besteht aus einer sich in Längsrichtung einer Schiene 3 erstreckenden, von außen nicht sichtbaren Magnetspule 4 und aus einem Magnetkern bzw. Grund- oder Trägerkörper 5, dessen Schenkel 5.1 und 5.2 parallel zueinander verlaufen. An den Schenkeln 5.1 und 5.2 sind Polschuhe 7.1, 7.2 angeordnet. Zwischen den Polschuhen 7.1, 7.2 und einem Schienenkopf 8 der Schiene wird ein Luftspalt 9 ausgebildet. Die Polschuhe 7.1, 7.2 bestehen bevorzugt aus einem Reibwerkstoffmaterial, z.B. Stahl, Sphäroguss oder Sinterwerkstoffen. In einem Zwischenraum zwischen dem linken und dem rechten Polschuh 7.1,7.2 (magnetischer Nordbeziehungsweise Südpol) kann eine den Zwischenraum ausfüllende amagnetische, verschleißfeste, stoßfeste und temperaturbeständige Zwischenleiste 13 angeordnet sein.

Weiterhin ist eine wenigstens zwei elektrische Anschlüsse 15, 17 für den Plus- bzw. Minuspol einer Spannungsquelle aufweisende Anschlusseinrichtung 19 vorhanden, welche stirnseitig, innerhalb einer gedachten einhüllenden Fläche 21 des magnetischen Grund- oder Trägerkörpers 5 angeordnet ist. Unter der einhüllenden Fläche 21 soll die stirnseitige Fortsetzung der äußeren Mantelfläche oder Querschnittsaußenkontur des Grund- und/oder Trägerkörpers 5 verstanden werden. Innerhalb der gedachten einhüllenden Fläche 21 des magnetischen Grund- oder Trägerkörpers 5 bedeutet, dass die Anschlusseinrichtung 19 im wesentlichen nicht bzw. kein Abschnitt von ihr über die einhüllende Fläche 21 hinausragt.

Wie aus Fig.1 hervorgeht, sind die beiden elektrischen Anschlüsse 15, 17 (Minus- bzw. Pluspol) bezüglich einer vertikalen Mittelebene 23 des Grund- oder Trägerkörpers 5 beispielsweise symmetrisch angeordnet. Sie können sich in Bezug zu dieser vertikalen Mittelebene 23 aber auch beide auf einer Seite befinden, wie in der Ausführungsform von Fig.2 dargestellt.

Besonders bevorzugt ist die Anschlusseinrichtung 19 unterhalb einer Längsschwerpunktsachse 25 der Magnetspule 4 angeordnet, wie beide Ausführungen gemäß Fig1 und Fig.2 zeigen. Insbesondere wird die Anschlusseinrichtung durch wenigstens einen mit dem Grund- oder Trägerkörper 5 verbundenen Anschlusskasten 19 aus dia- bzw. paramagnetischem Material gebildet.

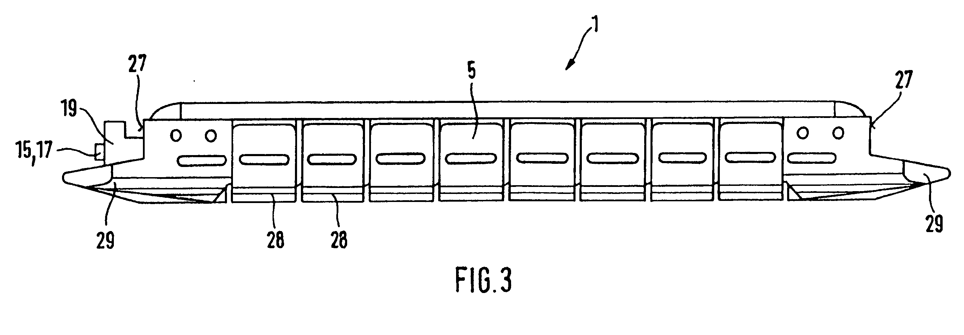

Gemäß einer Weiterbildung kann die Anschlusseinrichtung 19 durch einen an einer Stirnseite 27 des Grund- oder Trägerkörpers 5 gehaltenen Anschlusskasten 19 gebildet werden, von welchem die beiden elektrischen Anschlüsse 15, 17 in Richtung der Längserstreckung des Grund- oder Trägerkörpers 5 wegragen. Diese Ausführung ist in Fig.3 gezeigt, welche eine Magnetschienenbremse 1 mit Zwischengliedern 28 zeigt. Insbesondere kann dann vorgesehen sein, dass die Anschlusseinrichtung 19 oberhalb eines sich in Längsrichtung erstreckenden stirnseitigen Endstücks 29 des Grund- oder Trägerkörpers 5 angeordnet ist, dieses aber nicht überragt. Anstatt an nur einer Stirnseite 27 können, falls notwendig, auch an beiden Stirnseiten elektrische Anschlüsse 15, 17 vorgesehen sein.

### Bezugszahlenliste

- 1: Magnetschienenbremse
- 3: Schiene
- 4: Magnetspule
- 5: Magnetkern
- 5.1, 5.2: Schenkel
- 7.1, 7.2: Polschuhe
- 8: Schienenkopf
- 9: Luftspalt
- 13: Zwischenleiste
- 15: elektr. Anschluss
- 17: elektr. Anschluss
- 19: Anschlusseinrichtung
- 21: einhüllende Fläche
- 23: vertikale Mittelebene
- 25: Längsschwerpunktachse
- 27: Stirnseite
- 28: Zwischenglieder
- 29: Endstück

## Patentansprüche

1. Magnetschienenbremsvorrichtung (1) eines Schienenfahrzeugs mit einem magnetischen Grund- oder Trägerkörper (5) sowie einer Magnetspule (4), welche mittels einer vom Grund- oder Trägerkörper (5) gehaltenen, wenigstens einen elektrischen Anschluss (15, 17) aufweisenden Anschlusseinrichtung (19) mit einer Spannungsquelle verbindbar ist, wobei die Anschlusseinrichtung (19) stirnseitig, innerhalb einer gedachten einhüllenden Fläche (21) des Grund- oder Trägerkörpers (5) angeordnet ist, **dadurch gekennzeichnet, dass** die Anschlusseinrichtung (19) unterhalb einer Längsschwerpunktachse (25) der Magnetspule (4) angeordnet ist.

2. Magnetschienenbremsvorrichtung nach Anspruch 1, **dadurch gekennzeichnet, dass** die Anschlusseinrichtung (19) oberhalb eines sich in Längsrichtung erstreckenden stirnseitigen Endstücks (29) des Grund- oder Trägerkörpers (5) angeordnet ist, dieses aber in Längsrichtung nicht überragt.

3. Magnetschienenbremsvorrichtung nach wenigstens einem der vorhergehenden Ansprüche, **dadurch gekennzeichnet, dass** die Anschlusseinrichtung durch wenigstens einen mit dem Grund- oder Trägerkörper (5) verbundenen Anschlusskasten (19) aus dia- bzw. paramagnetischen Material gebildet wird.

4. Magnetschienenbremsvorrichtung nach wenigstens einem der vorhergehenden Ansprüche, **dadurch gekennzeichnet, dass** die Anschlussvorrichtung (19) stirnseitig an beiden Enden des Grund- oder Trägerkörpers (5) angeordnet ist und jeweils nur einen elektrischen Anschluss (15, 17) aufweist.

## Claims

1. Magnetic rail brake device (1) of a railway vehicle, comprising a magnetic base or carrier body (5) as well as a solenoid (4) that is adapted to be connected to a voltage source by means of a connecting means (19) held by said base or carrier body (5) and including at least one power connection terminal (15, 17), with said connecting means (10) being disposed on the front end side, within an imaginary envelope surface (21) of said base or carrier body (5), **characterised in that** said connecting means (19) is disposed below a longitudinal centre-of-gravity axis (25) of said solenoid (4).

2. Magnetic rail brake device according to Claim 1, **characterised in that** said connecting means is disposed above a terminal piece (29) of said base or carrier body (5), which extends along the longitudinal direction on the front end side, but does not project beyond this body along the longitudinal direction.

3. Magnetic rail brake device according to at least one of the preceding Claims, **characterised in that** said connecting means is constituted by at least one junction box (19) made of diamagnetic or paramagnetic material, which is connected to said base or carrier body (5).

4. Magnetic rail brake device according to at least one of the preceding Claims, **characterised in that** said connecting device (19) is disposed, on the front end side, on both ends of said base or carrier body (5) and presents only a single respective power connection terminal (15, 17).

## Revendications

1. Dispositif de patin magnétique (1) d'un véhicule ferroviaire, comprenant un corps de base ou de support (5) magnétique ainsi qu'une bobine d'électroaimant (4), qui est apte à être raccordé à une source de courant moyennant un moyen de raccord (19) retenu par ledit corps de base ou de support (5) et comprenant au moins un branchement électrique (15, 17), audit moyen de raccord (10) étant disposé du côté frontal, au-dedans d'une surface enveloppante imaginaire (21) dudit corps de base ou de support (5), **caractérisé en ce que** ledit moyen de raccord (19) est disposé au-dessous d'un axe du centre de gravité longitudinal (25) de ladite bobine d'électroaimant (4).

2. Dispositif de patin magnétique selon la revendication 1, **caractérisé en ce que** ledit moyen de raccord est disposé au-dessus d'une pièce terminale (29) dudit corps de base ou de support (5), qui s'étend en sens longitudinal du côté frontal, mais ne fait pas saillie de ce corps en sens longitudinal.

3. Dispositif de patin magnétique selon au moins une des revendications précédentes, **caractérisé en ce que** ledit moyen de raccord est constitué par au moins une boîte de jonction (19) faite en un matériau diamagnétique ou paramagnétique, qui est raccordée audit corps de base ou de support (5).

4. Dispositif de patin magnétique selon au moins une des revendications précédentes, **caractérisé en ce que** ledit dispositif de raccord (19) est disposé, du côté frontal, aux deux extrémités dudit corps de base ou de support (5) et ne présente qu'un seul branchement électrique (15, 17) respectif.
